# EUROPÄISCHE PATENTSCHRIFT

(11) **EP 0 694 450 B1**
(45) Veröffentlichungstag und Bekanntmachung des Hinweises auf die Patenterteilung: **21.04.1999**
(21) Anmeldenummer: 95108457.3
(22) Anmeldetag: 02.06.1995
(51) Int. Cl.: B60R 25/06, B60R 25/02

(54) **Vorrichtung zur Verriegelung des Zündschlüssels eines Kraftfahrzeuges mit dem Wahlhebel eines Automatikgetriebes**
Device for interlocking the ignition key of a motor vehicle with the selector lever of an automatic gearbox
Dispositif pour verrouiller la clef de contact d'un véhicule automobile au moyen du levier de sélection de la boîte de vitesse automatique

(30) Priorität: 27.07.1994 DE 4426533
(43) Veröffentlichungstag der Anmeldung: 31.01.1996
(73) Patentinhaber: Dr.Ing.h.c. F. Porsche Aktiengesellschaft, 70435 Stuttgart (DE)
(72) Erfinder: Höbel, Peter, D-75242 Neuhausen-Schellbronn (DE)

(56) Entgegenhaltungen:
- EP-A- 0 334 672
- US-A- 4 474 085
- US-A- 4 936 158
- US-A- 5 085 096
- US-A- 5 207 124

## Beschreibung

Die Erfindung geht aus von einer Vorrichtung zur Verriegelung des Zündschlüssels eines Kraftfahrzeuges mit dem Wählhebel eines Automatikgetriebes nach der Gattung des Hauptanspruches.

Aus der DE 42 25 182 A1 ist eine mechanische Verriegelungvorrichtung bekannt, bei der ein Seilzug von einem Verriegelungselement am Zündschloß an einem schwenkbar gelagerten Hebel angreift, der in einer definierten Stellung des Zündschlosses mit einem Winkelanschlag eines zweiten schwenkbaren Sperrelementes zusammenwirkt. Dieses zweite Sperrelement hat eine Nockenkontur, in die ein Querstift der Druckstange des Wählhebels eingreifen kann. Zur Verriegelung des Wählhebels bzw. des Zündschlüssels müssen beide Schwenkelemente und der Querstift der Druckstange zusammenwirken, so daß sich alle bauartbedingten Toleranzen aufgrund der Fertigung und der Bewegungsmöglichkeiten addieren können.

Aus der gattungsgemäßen US 5,207,124 A, die dem Oberbegriff des Anspruchs 1 entspricht, ist eine entsprechende Vorrichtung zur Verriegelung des Zündschlüssel eines Kraftfahrzeuges bekannt, bei dem die Druckstange des Wählhebels über ein Zwischenelement auf einen abgewinkelten Arm eines Sperrhebels einwirkt. Dieser Sperrhebel ist zum einen mit einem zum Zündschloß führenden Seilzug verbunden und wirkt andererseits über eine im abgewinkelten Hebelarm ausgebildete Sperrkontur mit einem am Wählhebel angeordneten Sperrstift zusammen. Diese Vorrichtung hat jedoch den Nachteil, daß der Sperrhebel mit vertretbarem Kraftaufwand aufgrund der Hebelverhältnisse und der Lagezuordnung des Zwischenelementes und des an diesem angreifenden Hebelarmes nicht durch Betätigen der Druckstange in seine in die Bewegung des Wählhebels freigebende Stellung bewegt werden kann. Um den Sperrhebel in diese Position zu bewegen, ist entweder ein zusätzliches Federelement notwendig, das zu einer zusätzlichen Belastung des Seilzuges und damit der Betätigungskraft am Zündschlüssel führen würde, oder der Sperrhebel muß durch den Seilzug entsprechend betätigt werden. Dazu ist jedoch eine drückende Wirkung des Seilzuges erforderlich, die diesen unter Umständen stauchen bzw. abknicken kann.

Demgegenüber ist es Aufgabe der Erfindung, eine rein mechanisch wirkende, einfache Zündschlüsselverriegelung zu schaffen, die mit einer geringeren Zahl von Bauelementen auskommt, so daß einerseits der Bauteilaufwand verringert wird und andererseits der Einfluß von Bauteiltoleranzen und Bewegungstoleranzen minimiert wird. Darüber hinaus soll der Sperrhebel ohne zusätzlichen Kraftaufwand am Zündschlüssel bzw. ohne eine über den Seilzug aufzubringende Druckwirkung in seine - in Abhängigkeit von der Stellung des Zündschlüssels - die Bewegung des Wählhebels freigebende Stellung bewegbar sein.

Diese Aufgabe wird erfindungsgemäß mit den kennzeichnenden Merkmalen des Anspruches 1 gelöst. Wenn das schwenkbare Sperrelement direkt über ein Führungselement und eine Führungsbahn mit dem Wählhebel zusammenwirkt und die Druckstange des Wählhebels über ein längsgeführtes Zwischenelement direkt auf das Sperrelement einwirkt, ist eine mechanische Verriegelung mit nur einem schwenkbaren Bauteil zusätzlich zum Wählhebel möglich, so daß der gesamte Verriegelungsvorgang weniger toleranzbehaftet ist. Damit ergibt sich eine einfach aufgebaute, mit wenigen Bauteilen auskommende mechanische Verriegelungseinrichtung, die sicher gegen Fehlbenutzung und Mißbrauch ist. Wird das schwenkbare Sperrelement als Hebel ausgebildet, an dessen einem Hebelarm die Druckstange bzw. das Zwischenelement einwirkt und an dessen anderem Hebelarm der Seilzug angreift, wird ein Mißbrauch bzw. eine Fehlnutzung durch unvorhergesehenes Betätigen der Druckstange ausgeschlossen, da dieses zu einer Zugwirkung auf den Seilzug führen würde. Ein Stauchen des Seilzuges durch Betätigen der Druckstange wird ausgeschlossen. Durch Drücken der Druckstange wird der zugeordnete Hebelarm so bewegt, daß die Verriegelung aufgehoben und gleichzeitig das Verriegelungselement am Zündschloß durch die Zugwirkung des Seilzuges in seine Entriegelstellung bewegt wird.

Durch Ausbildung der Führungsbahn mit einem gekrümmten Abschnitt mit zwei gegenüberliegenden Führungskanten, zwischen denen der Führungsfortsatz mit geringem Spiel geführt ist, ergibt sich eine Zwangsführung zwischen Wählhebel und Sperrelement, durch die ein mißbräuchliches Verschwenken des Sperrelementes in die Verriegelungsstellung verhindert wird.

Die Führungsbahn und das Führungselement wirken vorteilhafter Weise über den gesamten Schwenkbereich des Wählhebels zusammen, so daß in keiner Arbeitsstellung des Wählhebels ein mißbräuchliches Auseinanderführen der beiden Führungselemente möglich ist.

Ein Ausführungsbeispiel der Erfindung wird in der nachfolgenden Beschreibung und Zeichnung beispielhaft näher erläutert.

Es zeigen:
- Fig. 1: eine vereinfachte Darstellung eines Wählhebels und Zündschlosses in Sperrstellung, teilweise im Schnitt,
- Fig. 2: eine vereinfachte Darstellung des Wählhebels und Zündschlosses in einer entriegelten Stellung.

Ein Wählhebel 1 eines Automatikgetriebes ist in einer karosseriefesten Schwenkachse 2 schwenkbar gelagert. Im Wählhebel 1 ist eine Druckstange 3 axial beweglich geführt, die durch eine Feder 4 gegen die Betätigungsrichtung beaufschlagt ist. An der Druckstange 3 ist ein Verriegelungszapfen 5 angebracht, der mit einem Rastprofil 6 zusammenwirkt. Dieses ist mit einer Vielzahl von Rastnuten 7 versehen, in die der Verriegelungszapfen 5 bei den unterschiedlichen Schwenkstellungen, die entsprechenden Gangstufungen (P, N, R, D, 1, 2, 3) des nicht dargestellten Getriebes entsprechen, verriegelnd eingreift.

An einer zweiten karosseriefesten Schwenkachse 8, die parallel zur ersten Schwenkachse 2 ausgeführt ist, ist ein Sperrelement 9 schwenkbar gelagert. Das Sperrelement 9 ist als Hebel ausgebildet, an dessen einem Hebelarm 10 ein Seilzug 11 befestigt ist, dessen anderes Ende an einem Verriegelungselement 12 im Zündschloß 13 befestigt ist. Im Zündschloß 13 ist eine Druckfeder 14 angeordnet, die auf das Verriegelungselement einwirkt und den Seilzug 11 in Zugrichtung beaufschlagt. Das Verriegelungselement 12 hat eine Verriegelungsnut 15, in die der Zylinder 16 eingreifen kann, wenn sich das Verriegelungselement 12 in seiner oberen Endstellung befindet. In dieser Endstellung des Verriegelungselementes 12 ist der Zylinder 16 frei drehbar und neben dem freien Verdrehen des Zylinders 16 auch das Abziehen des nicht dargestellten Zündschlüssels in einer definierten Stellung möglich.

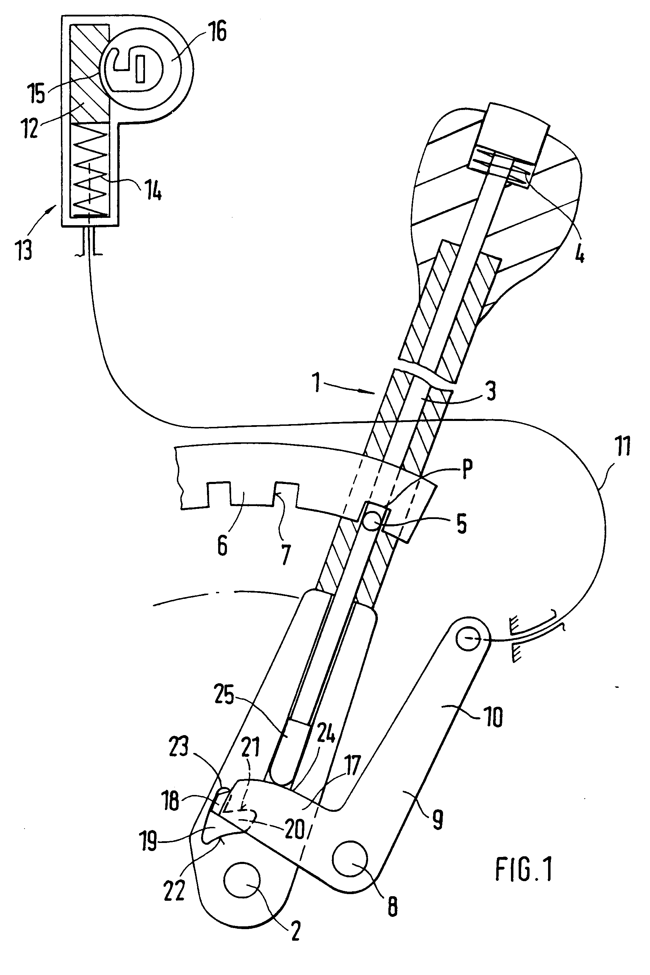

Am zweiten Hebelarm 17 des Sperrelementes 9 ist eine abgewinkelte Führungsnase 18 ausgebildet, die in eine Führungsbahn 19 am Wählhebel eingreift. Diese Führungsbahn 19 hat einen gekrümmten Abschnitt 20 mit einer oberen Führungskante 21 und einer unteren Führungskante 22. Von diesem gekrümmten Abschnitt 20 geht ein Verriegelungsabschnitt 23 aus, in dem sich in der in Fig. 1 dargestelleten Stellung des Wählhebels und Zündschlosses die Führungsnase 18 befindet.

Auf die gekrümmte Oberkante 24 des zweiten Hebelarms 17 drückt ein im Wählhebel 1 längsbeweglich geführtes Zwischenelement 25. In der in Fig. 1 dargestellten Stellung des Zündschlosses 13 befindet sich das Verriegelungselement 12 in seiner oberen Endstellung, der Verriegelungsstellung.

Der Wählhebel 1 befindet sich in der Schaltstellung P, die der Parkstellung des nicht dargestellten Getriebes entspricht. In dieser Stellung des Wählhebels 1 liegt das Zwischenelement 25 einerseits auf dem zweiten Hebelarm 17 des Sperrelememts 9 auf, gleichzeitig liegt die Druckstange 3 auf der Oberseite des Zwischenelements 25 auf. Der Verriegelungszapfen 5 ist in der der Schaltstellung P entsprechenden Rastnut 7 eingerastet. Ein Verschwenken des Wählhebels 1 ist in dieser Schaltstellung nicht möglich, da einerseits die Führungsnase 18 im Verriegelungsabschnitt 23 ein Schwenken verhindet. Gleichzeitig ist ein zum Verschwenken des Wählhebels 1 erforderliches Lösen des Verriegelungszapfens 5 aus der Rastnut 7 durch Niederdrücken der Druckstange 3 nicht mögich, da sich über die Anlage der Druckstange 3 am Zwischenelement 25 und dessen Anlage an der Oberkante 24 des zweiten Hebelarmes 17 eine Verriegelung ergibt. Ein Verschwenken des Sperrelementes 9 durch Niederdrücken der Druckstange 3 wird durch den in der Verriegelungsstellung des Verriegelungselementes 12 gespannten Seilzug 11 verhindert.

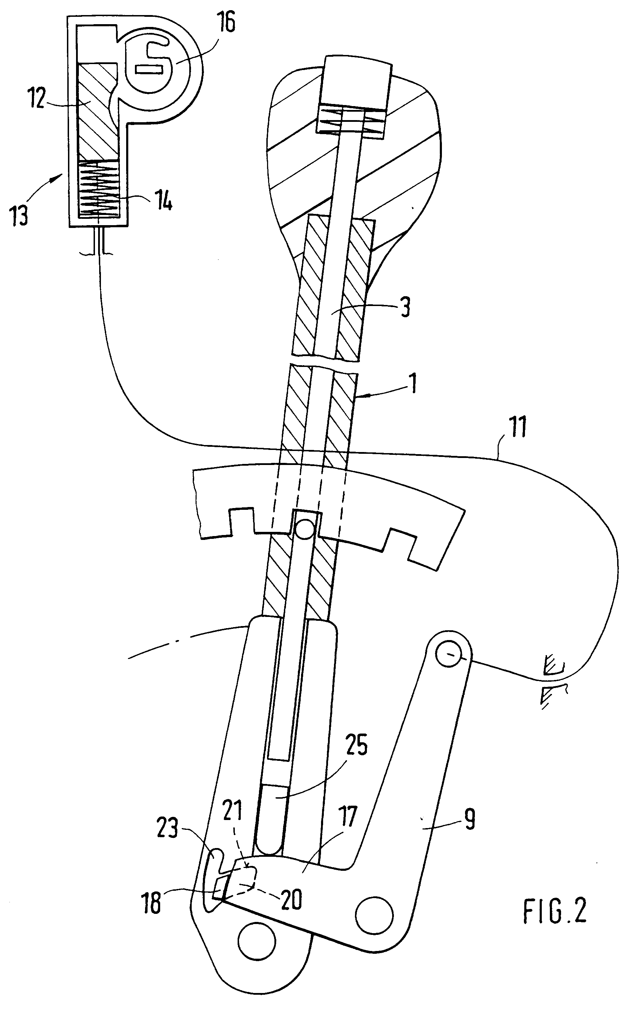

Bei der in Fig. 2 dargestellten entriegelten Stellung von Zündschloß 13 und Wählhebel 1 ist das Verriegelungselement 12 nach Drehen des Zylinders 16 frei beweglich. Durch Drücken der Druckstange 3 wird der zweite Hebelarm 17 über das Zwischenelement 25 nach unten gedrückt, so daß die Führungsnase 18 aus dem Bereich des Verriegelungsabschnittes 23 in den Bereich des gekrümmten Abschnittes 20 gelangt. Damit ist ein Verschwenken des Wählhebels 1 möglich. Durch die obere Führungskante 21 des gekrümmten Abschnittes 20 wird ein Zurückschwenken des Sperrelementes 9 verhindert, so daß das Verriegelungselement 12 über den Seilzug 11 gegen die Wirkung der Druckfeder 14 stets nach unten gezogen wird. Ein Zurückdrehen des Zylinders 16 in eine Zündstellung, in der ein Abziehen des Zündschlüssels möglich ist, wird damit verhindert. Ein Zurückdrehen des Zylinders 16 in diese Endstellung wird erst wieder möglich, wenn der Wählhebel 3 in die Stellung P zurückgeschwenkt und die Druckstange 3 entlastet sind. Damit wird das Zwischenelement 25 entlastet, so daß aufgrund der Wirkung der Druckfeder 14 das Sperrelement 9 über den Seilzug 11 zurückgezogen wird. Dadurch kommt die Führungsnase 18 in den Bereich des Verriegelungsabschnittes 23, in dem ein vollständiges Zurückziehen des Sperrelementes 9 bzw. Zurückdrücken des Verriegelungselementes 12 in seine obere Endstellung möglich ist.

## Patentansprüche

1. Vorrichtung zum Verriegeln des Zündschlüssels eines Kraftfahrzeuges mit einem schwenkbaren Wählhebel eines Kraftfahrzeug-Automatikgetriebes, der in seinen Wählstellungen mittels einer in ihm längsgeführten, federbelasteten Druckstange verrastbar und aus der Verrastung durch Niederdrücken lösbar ist, und mit einem Verriegelungselement im Zündschloß, das über einen Seilzug mit einem schwenkbaren Sperrelement am Wählhebel verbunden ist, wobei das Sperrelement (9) und der Wählhebel (1) über eine Führungsbahn (19) an einem der beiden Bauteile und ein Führungselement (18) am anderen Bauteil zusammenwirken und die Druckstange (3) über ein im Wählhebel längsgeführtes Zwischenelement (25) auf das Sperrelement einwirkt, dadurch gekennzeichnet, daß das Sperrelement (9) als zweiarmigen Hebel ausgebildet ist, von dessen einer Schwenkachse (8) die beiden Arme (10, 17) ausgehen, dessen einen Hebelarm (17) mit einem Führungselement (18) am Wählhebel (1) zusammenwirkt und an dessen anderem Hebelarm (10) der Seilzug (11) angreift, und daß das Zwischenelement (25) auf den seilabgewandten Hebelarm des Sperrelementes (9) einwirkt, so daß durch Betätigung der Druckstange (3) bei einer Wirkverbindung zwischen Druckstange (3), Zwischenelement (25) und Sperrelement (9) eine Zugwirkung auf den Seilzug ausgeübt wird.

2. Vorrichtung nach Anspruch 1, dadurch gekennzeichnet, daß die Führungsbahn (19) einen gekrümmten Abschnitt (20) mit zwei gegenüberliegenden Führungskanten (21, 22) hat, zwischen denen das Führungselement (18) mit geringem Spiel geführt ist, und daß die Führungsbahn (19) einen abgewinkelten Verriegelungsabschnitt (23) aufweist.

3. Vorrichtung nach einem der Ansprüche 1 oder 2, dadurch gekennzeichnet, daß die Führungsbahn (19) und das Führungselement (18) über den gesamten Schwenkbereich des Wählhebels (1) zusammenwirken.

## Claims

1. A device for interlocking the ignition key of a motor vehicle having a pivotable selector lever of an automatic gearbox of a motor vehicle, the selector lever being engageable in its selection settings by means of a spring-loaded thrust rod guided longitudinally therein and being releasable from the engagement by being pressed down, and having a locking member in the ignition lock connected by way of a Bowden cable to a pivotable blocking member on the selector lever, wherein the blocking member (9) and the selector lever (1) cooperate by way of a guide path (19) on one of the two components and a guide member (18) on the other component, and the thrust rod (3) acts upon the blocking member by way of an intermediate member (25) guided longitudinally in the selector lever, **characterized in that** the blocking member (9) is designed in the form of a two-armed lever, from one pivot axis (8) of which the two arms (10, 17) extend and one lever arm (17) of which cooperates with a guide member (18) on the selector lever (1) and on the other lever arm (10) of which the Bowden cable (11) engages, and the intermediate member (25) acts upon the lever arm of the blocking member (9) remote from the cable, so that - by actuating the thrust rod (3) as an operative connexion is made between the thrust rod (3), the intermediate member (25) and the blocking member (9) - a pulling action is exerted upon the Bowden cable.

2. A device according to Claim 1, **characterized in that** the guide path (19) has a curved portion (20) with two opposed guide edges (21, 22), between which the guide member (18) is guided with slight clearance, and the guide path (19) has an angled locking portion (23).

3. A device according to one of Claims 1 and 2, **characterized in that** the guide path (19) and the guide member (18) cooperate over the entire pivoting range of the selector lever (1).

## Revendications

1. Dispositif de verrouillage de la clé de contact d'un véhicule automobile au moyen d'un levier de sélection pivotable d'une boîte de vitesses automatique du véhicule, qui dans ses positions de sélection peut être enclenché au moyen d'une tige de pression soumise à l'action d'un ressort, guidée longitudinalement, et qui peut être désengagé par pression vers le bas, et au moyen d'un élément de verrouillage dans la serrure de contact, qui est relié par un câble Bowden à un élément de blocage pivotable sur le levier de sélection, l'élément de blocage (9) et le levier de sélection (1) coopérant par une voie de guidage (19) sur l'un des deux composants et par un élément de guidage (18) sur l'autre composant, et la tige de pression (3) agissant sur l'élément de blocage, par un élément intermédiaire (25) guidé longitudinalement dans le levier de sélection, caractérisé en ce que l'élément de blocage (9) est réalisé en tant que levier à deux bras, les deux bras (10, 17) partant de l'un de ses axes de pivotement (8), dont un bras de levier (17) coopère avec un élément de guidage (18) sur le levier de sélection (1), et sur l'autre bras de levier (10) agit le câble Bowden (11) et en ce que l'élément intermédiaire (25) agit sur le bras de levier tourné à l'opposé du câble, de sorte que par actionnement de la tige de pression (3) un effet de traction est exercé sur le câble Bowden, en cas de liaison active entre la tige de pression (3), l'élément intermédiaire (25) et l'élément de blocage (9).

2. Dispositif selon la revendication 1, caractérisé en ce que la voie de guidage (19) présente une portion (20) courbée avec deux bords de guidage (21, 22) opposés l'un à l'autre entre lesquels l'élément de guidage (18) est guidé avec un jeu réduit, et en ce que la voie de guidage (19) présente une portion de verrouillage (23) coudée.

3. Dispositif selon l'une des revendications 1 ou 2, caractérisé en ce que la voie de guidage (19) et l'élément de guidage (18) coopèrent sur toute la plage de pivotement du levier de sélection (1).
